# EUROPEAN PATENT APPLICATION

(11) **EP 1 801 402 A2**
(43) Date of publication of application: **27.06.2007**
(21) Application number: 06256384.6
(22) Date of filing: 15.12.2006
(51) Int. Cl.: F02K 1/30, F02K 7/075

(54) **Pulsed combustion fluidic nozzle**

(30) Priority: 22.12.2005 US 317222
(71) Applicant: UNITED TECHNOLOGIES CORPORATION, Hartford, CT 06101 (US)
(72) Inventor: Roberge, Gary D., Tolland, CT 06084 (US); Wozniak, James, South Windsor, CT 06074 (US); Twelves, Wendell V., Jr., Glastonbury, CT 06033 (US)
(74) Representative: Leckey, David Herbert

(57) **Abstract**

A propulsion system (20) for producing thrust includes a turbine engine (34). The engine has a compressor (38), a combustor (54) downstream of the compressor (38) along a flow path, and a turbine (58) downstream of the combustor (54) along the flow path. A plurality of combustion conduits (100) have outlets (104) positioned to discharge combustion gas to form a fluidic nozzle throat.

## Description

### BACKGROUND OF THE INVENTION

The invention relates to turbine engines. More particularly, the invention relates to nozzles for turbine engines used for propulsion.

An engine utilizing an augmentor requires a variable area nozzle to control the increased gas expansion velocity of the exhaust gases. An exemplary nozzle comprises two or more pairs of convergent and divergent flaps. The pairs combine to define a throat. The area of the throat may be controlled mechanically through the use of actuators acting on the flap pairs. In an exemplary configuration, the actuator(s) essentially control the orientation of the convergent flaps to dictate throat area. The divergent flaps have a bounded degree of rotational freedom to assume (in combination with an external flap (if any)) a force balancing exit angle.

Another means for controlling the exhaust gases is using a fixed area nozzle with fluidic control. United States Patent 5,706,650 identifies a vectoring nozzle using injected high pressure air to provide fluidic control.

### SUMMARY OF THE INVENTION

In accordance with one aspect of the invention, a propulsion system for producing thrust includes a turbine engine. The engine has a compressor, a combustor downstream of the compressor along a flow path, and a turbine downstream of the combustor along the flow path. A plurality of combustion conduits have outlets positioned to discharge combustion gas to form a fluidic nozzle throat.

In various implementations, a physical nozzle may be downstream of the turbine engine. The fluidic nozzle throat may be within the physical nozzle. The engine may include an augmentor.

The details of one or more embodiments of the invention are set forth in the accompanying drawings and the description below. Other features and advantages of the invention will be apparent from the description and drawings, and from the claims.

### BRIEF DESCRIPTION OF THE DRAWINGS

FIG. 1 is a top view of an aircraft propulsion system.
FIG. 2 is a partial vertical longitudinal sectional view of the system of FIG. 1.
FIG. 3 is an aft/downstream end view of the system of FIG. 1.
FIG. 4 is an enlarged view of pulse combustion fluidic nozzle device array of the system of FIG. 2.
FIG. 5 is a view of the array of FIG. 4.
FIG. 6 is a longitudinal sectional view of one of the devices of the array of FIG. 2.
FIG. 7 is a longitudinal sectional view of an alternative fluidic nozzle.

Like reference numbers and designations in the various drawings indicate like elements.

### DETAILED DESCRIPTION

A hypothetical air-powered fluidic nozzle would provide an effective amount of throat constriction related to the amount of air used. Bleed air for injection into the nozzle throat area would be drawn from the compressor discharge or mid-stage bleed. To limit the cycle impacts, bleed air from the compressor mid-stage would be preferred. The amount of air needed to control the nozzle exit area depends upon the nozzle turn down ratio (A8max/A8mil) versus the flow ratio (Wbleed/W8*sqrt (Tbleed/T8)) and the fan pressure ratio (FPR). Past studies have shown that based on a 7.0 FPR, the nozzle required a 10-25% bleed from the compressor. In a thrust vectoring situation, this would be disadvantageous because the reduced core flow would reduce engine thrust at a flight point (maneuvering) when an increase in thrust is typically demanded. The mission performance of the aircraft would thus be compromised.

Use of a combustive technology for nozzle throat control has the potential to partially-to-entirely avoid the problems of a pure bleed fluidic nozzle. Pulsed combustion, as has been proposed in pulsed detonation engine (PDE) technology, may present such a solution. The combustion may use bleed air as an oxidizer and may use fuel from the same source as the engine's primary combustor and augmentor.

The application of PDE technology allows a pressure rise of eight-to-one using a substantially constant volume combustion process. The pressure rise may contribute to several advantages. One advantage is permitting use of a much lower pressure bleed than a pure bleed fluidic nozzle. This may enable use of low pressure fan bleed air rather than higher pressure compressor bleed air to minimize adverse effects on performance. Another advantage is permitting a lower mass flow rate of the bleed which magnifies other advantages.

In addition there is a temperature rise associated with the pulsed combustion. The temperature rise is advantageous to produce expansion so as to increase the impact of a given amount (mass flow) of bleed air.

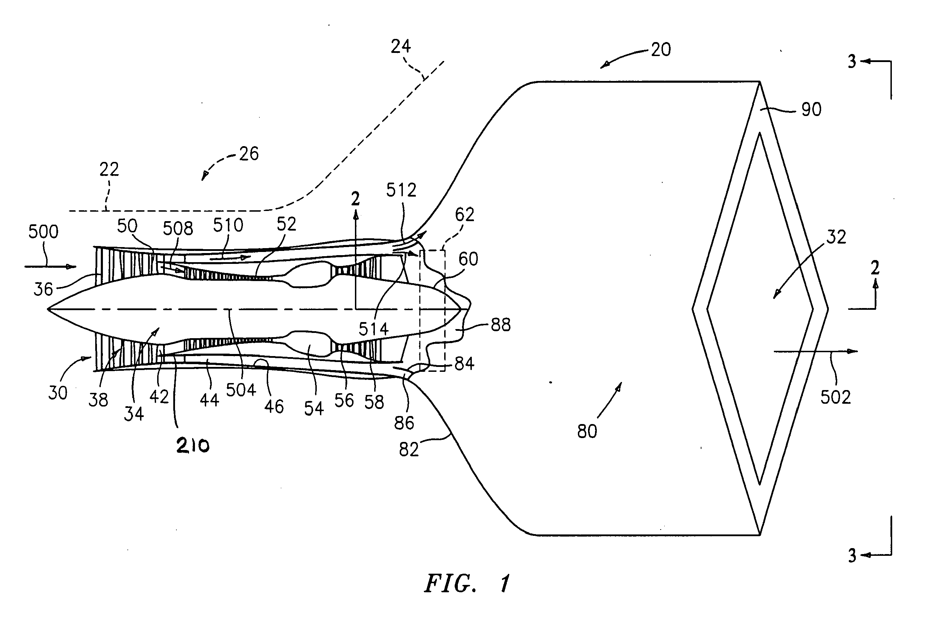

FIG. 1 shows a propulsion system 20 within the fuselage 22 and/or wing 24 of an aircraft 26. The propulsion system includes an air inlet 30 receiving an inlet air flow 500 and an exhaust outlet 32 discharging an exhaust flow 502. A gas turbine engine 34 is positioned between the inlet and outlet. The engine has a central longitudinal axis or centerline 504. The exemplary engine includes an upstream fan 36.

In the exemplary engine, a low pressure compressor (LPC) section 38 is immediately downstream of the fan. Downstream of the LPC 38, a dividing wall 210 splits the flow path into an inboard core flow path 42 and an outboard fan bleed flow path 44. The outboard extremity of the fan bleed flow path 44 is bounded by a fan duct 46. Flows 508 and 510, respectively, move downstream along the core flow path 42 and fan bleed flow path 44. Initially, the flows 508 and 510 each receive a portion of the inlet air flow 500. As it proceeds downstream, the air in the flow 508 is mixed with fuel in the combustor and becomes a combustion products flow. There may be communication between the flows 508 and 510 as is known in the art or may be developed. Certain communication for forming a fluid nozzle is discussed in further detail below.

Along the core flow path 42, downstream of the fan 36 and LPC 38, are, sequentially, a high speed/pressure compressor (HPC) 52, a combustor 54, a high speed/pressure turbine (HPT) 56, and a low speed/pressure turbine (LPT) 58. A tailcone 60 is shown downstream of the LPT 58. The system 20 may include an augmentor 62 integral with the tailcone 60 or remote therefrom.

An exhaust duct 80 extends downstream from the engine to the outlet 32. The exemplary duct 80 includes an outer wall 82 and an inner wall or liner 84 with a passageway 86 therebetween. The liner 84 surrounds an interior 88. The duct passageway 86 may be in communication with the fan bleed flow path 44 to receive a portion/flow 512 of the fan bleed air flow 510. Another portion/flow 514 may flow within the interior 88.

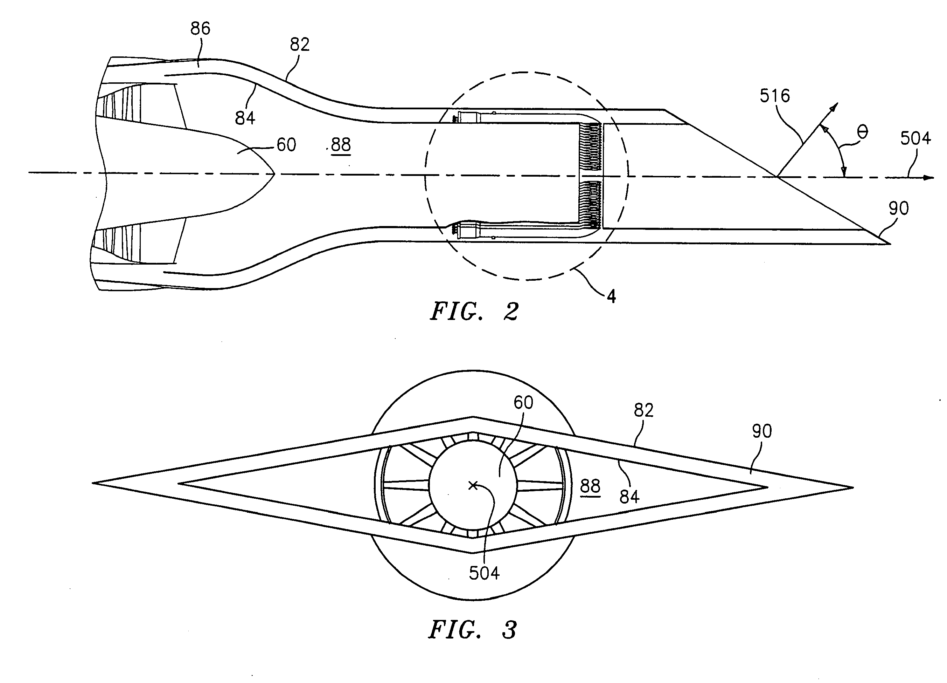

The exemplary exhaust duct 80 is vertically flattened and transversely expanded. The duct transitions from a circular cross-section at the engine to a rhomboidal cross-section (FIG. 3) at the outlet 32. Such a transition may be advantageous for a combination of aerodynamic and infrared (IR) signature attributes.

A closure 90 joins downstream ends of the outer wall 82 and liner 84 at the outlet 32. The exemplary outlet 32 is planar and has a normal 516 (FIG. 2) oriented at an angle θ from the downstream direction along the engine centerline 504. This upward openness helps control the downward IR signature.

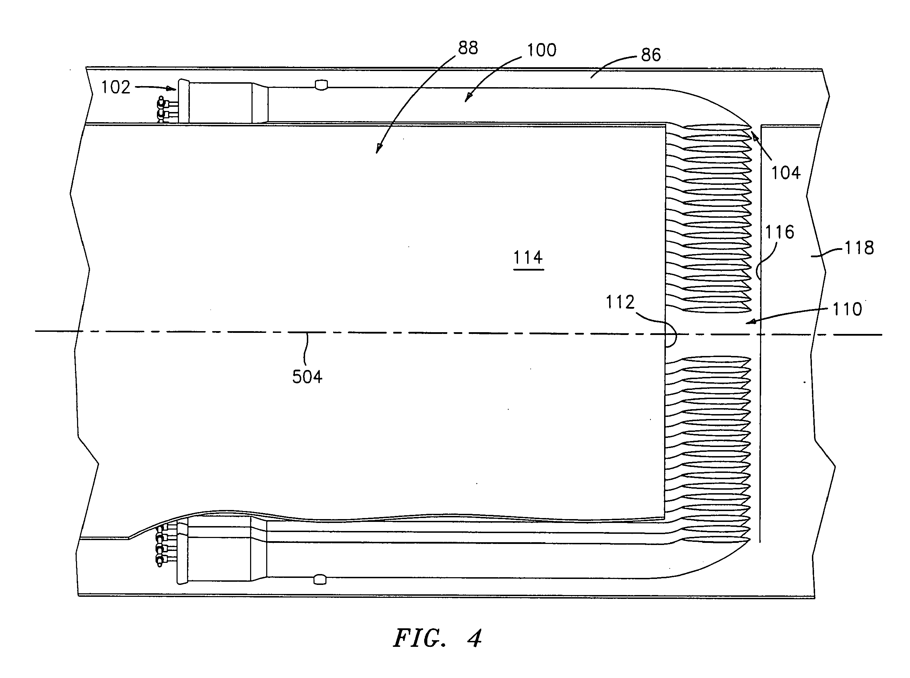

Within the passageway 86 a number of pulsed combustion devices 100 are positioned (FIG. 4). Each device 100 has an upstream inlet end 102 receiving a portion of the flow 512 and a downstream outlet end 104. The exemplary outlet ends 104 face inward into the duct interior 88 through a gap 110 between a downstream end 112 of an upstream portion 114 of the liner 84 and an upstream end 116 of a downstream portion 118 of the liner 84. The liner portions 114 and 118 may be perforated or otherwise foraminate so that a portion of the flow 512 is progressively bled through the liner holes to provide a film cooling effect (e.g., a film cooling effect along the inner surface of the liner which is exposed to the hot combustion gases). An additional portion of the flow 512 may pass through the gap 110 surrounding the outlets 104.

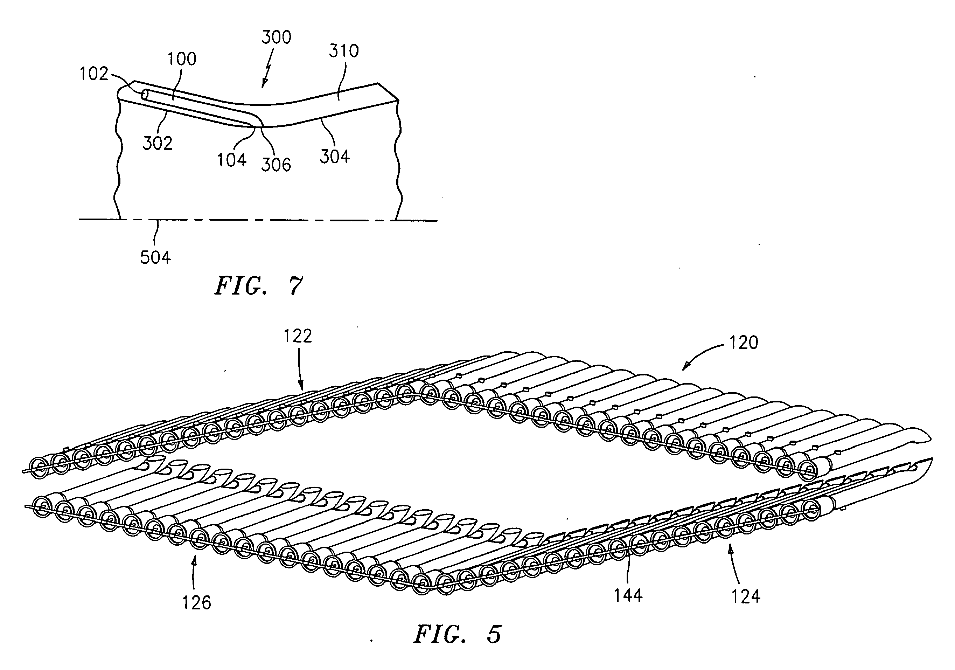

FIG. 5 shows the devices 100 as arranged in an upper group having port and starboard subgroups 120 and 122 and a lower group having port and starboard subgroups 124 and 126. Each of the groups 120-126 falls along an associated side of the local rhomboidal cross-section of the passageway 86.

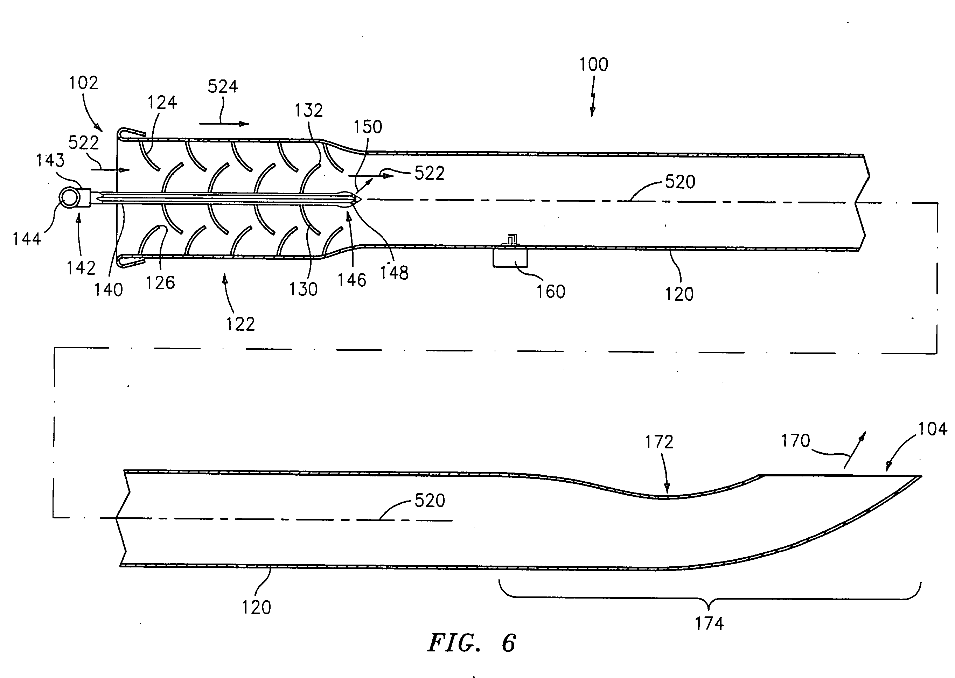

FIG. 6 shows one of the devices 100. The device 100 has a generally circular-sectioned tubular body 120 forming a conduit extending from the inlet 102 to the outlet 104. Within an enlarged diameter inlet end portion 122, the body contains a series of orifice plates 124 extending from an outboard perimeter at the body to an inboard aperture 126. The orifice plates are annular around a device centerline 520 and have longitudinal cross-sections with upstream convexity and downstream concavity. Alternatingly interspersed with the orifice plates 124 are shaped restrictor plates 130. The restrictor plates 130 are generally bowl-shaped, upstream convex and downstream concave, and have outboard perimeters 132 spaced inboard of the body but slightly outboard of the apertures 126 of the orifice plates 124.

The exemplary restrictor plates 132 have central apertures closely accommodating a common fuel line 140 of the device. The line 140 has a proximal end 142 connected (e.g., by an automatically controlled valve 143) to a supply line 144 common to the associated upper or lower group of devices. The supply line may extend to a fuel source (not shown) shared with the combustor and/or augmentor.

The downstream end 146 of the line 140 has injector or nozzle apertures 148 each discharging a fuel spray 150. The air flow 522 (e.g., a portion of the flow 512) passes through the combination of orifice plates and restrictor plates to receive the fuel spray 150. The conduit 120 carries an igniter 160 (e.g., a spark plug) to ignite the combination of fuel and air. This ignition leads to a detonation with a detonation wave and combustion products 170 being discharged from the outlet 104. During this discharge, the shapes of the restrictor plates and orifice plates serve to resist backflow of combustion products of the inlet 102. Alternative implementations might involve manually or automatically actuated air inlet valves.

Upstream of the outlet 104, a restriction is provided by an indentation 172 in an inboard region of the body 120. This restriction forms a physical throat of a convergent-divergent nozzle portion 174 of the body 120.

The combined effect of the discharged detonation waves and combustion products 170 from the various devices 100 is to provide a fluidic throat within the duct interior 88 for the flow of combustion products 502 from the engine. The properties of the fluidic throat may be varied to control effective nozzle properties for the engine.

Device firing may be controlled by a controller such as the aircraft's avionics. Control may be responsive to sensed conditions, including airspeed, altitude, internal engine temperatures and pressures, and the like. Control may also be responsive to other user/pilot or automated control inputs such as throttle or aerodynamic control position.

Operationally, the firing of the devices may be effective to provide thrust vectoring (effectively radially repositioning and/or reorienting the effective throat) and/or control over the effective throat area (and thus the exhaust gas velocity as discharged from the system).

One or more of several parameters may be used in various implementations to provide throat area control. These parameters include: (1) selective use of subgroups of the devices 100, firing more devices to constrict the throat to a smaller size (achievable by discontinuing fueling, discontinuing spark, or blocking air flow through the disabled devices); (2) modulation of the fuel introduction to the devices, with a greater fuel flow rate constricting the throat to a smaller size; and (3) controlling the cyclic rate of the devices (especially if fired in interspersed groups), with a greater cyclic rate constricting the throat to a smaller size.

Superposed atop the throat control, if any, the firing of the devices may be effective to provide thrust vectoring. In thrust vectoring, the balance amongst the devices or groups thereof may be controlled through similar techniques to those used for throat control. In a basic pitch control example, the relative balance of the upper and lower groups of devices may be varied. This might include varying the amount of fuel delivered to the devices, selectively disabling/enabling different ones of the devices, and the like. Yaw control may be achieved by port/starboard variations. Roll control may be achieved by combinations.

Appropriate aerospace materials and manufacturing techniques may be used for various system components. Exemplary materials for device bodies include high temperature nickel-based superalloys such as Inconel 625. An exemplary device body size involves a 0.5-3 inch (12.7-76.2 mm) (more narrowly 1-1.5 inch (25.4-38.1 mm)) inside diameter (ID) over a majority of a body overall length of 1-5 feet (0.3-1.52 m) (more narrowly 1.5-3 feet (0.46-0.92 m)). Noncircular-sectioned conduits may have similar lengths and cross-sectional areas. The number of conduits may be selected based upon the nozzle geometry. Packing them as close together as possible will provide the most uniform effluent field and the most effective fluidic control. An exemplary number is 10-150 (more narrowly 40-100).

Performance gains associated with throat control, may be offset by the fuel consumed to provide that control if the devices were run continuously. Thus, an exemplary system has the duct interior 88 shaped and dimensioned to provide a fixed nozzle geometry optimized for a design cruise point (e.g., at which an aircraft typically spends 90% of mission flight time). This could apply to both subsonic and supersonic aircraft and operation. System operation could be brought into play for extreme operation (either purely automatically or enabled responsive to a pilot switching the system from an "off condition to an on condition). Typically this would be an extreme high maneuvering situation, although extreme high maneuvering is often accompanied by extreme high thrust (and little worry about short term fuel consumption). Thus, principal use may be for thrust vectoring in extreme maneuvering situations.

FIG. 7 shows an alternate duct 300 that forms a fixed physical convergent/divergent nozzle having convergent and divergent surfaces 302 and 304 joined at a physical throat 306. One or more arrays of the devices 100 may be positioned within a duct passageway 310 with their outlets 104 positioned at or near the physical throat 306. For example, the convergence and divergence parameters and dimensions of the physical throat 306 (e.g., radius for a circular nozzle) may be selected for an extreme case scenario. For example, the throat size may be representative of the largest required throat size for the expected operational envelope. Operation of the devices 100 may, therefore, be selected to provide an advantageous fluid nozzle effect for conditions away from this extreme. Operational parameters may be similar to those discussed above.

The pulsed combustion fluidic nozzle may have one or more advantages relative to a conventional mechanical nozzle. Two advantages may be light weight and compact packaging, thereby increasing aircraft performance even in the absence of increased absolute engine performance. Other advantages may include reduced manufacture and maintenance costs. Relative to pure bleed fluidic nozzles, absolute performance increases (e.g., thrust magnitude and degree of vectoring) are more likely.

The invention may be applied to on-board piloted aircraft, remotely piloted aircraft and autonomous aircraft.

One or more embodiments of the present invention have been described. Nevertheless, it will be understood that various modifications may be made without departing from the scope of the invention. For example, in a redesign or retrofit situation, features of the existing engine and/or aircraft may influence details of any particular implementation. Accordingly, other embodiments are within the scope of the following claims.

## Claims

1. A propulsion system (20) for producing thrust comprising:
a turbine engine (34) having:
a compressor (38);
a combustor (54) downstream of the compressor (38)
along a flow path; and
a turbine (58) downstream of the combustor (54) along the flow path; and
a plurality of combustion conduits (100) having outlets (104) positioned to discharge combustion gas to form a fluidic nozzle throat.

2. The system of claim 1 wherein:
the system has a physical nozzle downstream of the turbine engine; and
the outlets (104) are positioned to discharge combustion gas to form a fluidic nozzle throat within the physical nozzle.

3. The system of claim 1 or 2 wherein:
at a first location, the conduits (100) surround the flow path along a majority of a perimeter of the flow path.

4. The system of any preceding claim wherein:
the engine (34) comprises a fan (36); and
the conduits (100) are plumbed to receive bleed air from the fan (36).

5. The system of any preceding claim further comprising:
an augmentor (62) upstream of the outlets (104).

6. The system of claim 5 wherein:
the augmentor (62) is a remote augmentor.

7. The system of claim 5 or 6 wherein:
the combustor (54), the augmentor (62), and the conduits (100) are fueled from a common source.

8. The system of any preceding claim further comprising:
a control system programmed by at least one of hardware and software to control the conduits (100) to reorient a vector of the thrust.

9. The system of any preceding claim in combination with:
a fuselage; and
a wing, so as to form at least one of an on-board piloted aircraft, a remotely piloted aircraft, and an autonomous aircraft.

10. A propulsion system for producing thrust comprising:
a turbine engine (34) having:
a compressor (38);
a combustor (54) downstream of the compressor (38)
along a flow path; and
a turbine (58) downstream of the combustor (38)
along the flow path; and
means (100) for varying an effective nozzle property by combustion.

11. The system of claim 10 wherein:
a physical nozzle is downstream of the turbine engine (34).

12. The system of claim 10 or 11 wherein:
the effective property includes both an effective area and an effective vectoring orientation.

13. The system of any of claims 10 to 12 wherein:
the combustion is by pulsed combustion.

14. A nozzle comprising:
a convergent portion (302);
a divergent portion (304);
a physical throat (306); and
a plurality of combustion conduits (100) each having:
at least one inlet (102) positioned to receive fuel and air;
an ignitor (160) for initiating combustion of the fuel and air; and
at least one outlet (104), positioned to discharge combustion products to form a fluidic throat.

15. The nozzle of claim 14 further comprising:
a plurality of valves, coupled to the plurality of combustion products so as to provide at least partially independent control of delivery of the fuel to individual ones or individual subgroups of the combustion conduits (100).

16. The nozzle of claim 14 or 15 wherein:
the physical throat (306) has an essentially rhomboidal transverse sectional shape.

17. The nozzle of any of claims 14 to 16 wherein:
the combustion conduits (100) extend along at least a majority of a length of a convergent portion (302) of the physical throat.

18. A method for controlling an aircraft propulsion system comprising:
operating a turbine engine (34) of the propulsion system to direct a flow of engine exhaust through passageway and a discharge conduit to discharge from the aircraft to produce thrust to propel the aircraft;
flowing air to a plurality of combustion conduits (100);
flowing fuel to said plurality of combustion conduits (100);
igniting said air and fuel;
discharging combustion products of said air and fuel to vary an effective nozzle property of the discharge conduit.

19. The method of claim 18 further comprising:
selectively operating an augmentor (62) to combust an augmentor fuel within the passageway to increase the thrust;

20. The method of claim 18 or 19 wherein:
the discharging is performed to reorient a thrust vector.

21. The method of claim 18, 19 or 20 wherein:
the discharging is performed to effectively throttle.

22. A method for retrofitting a turbine engine or reengineering a turbine engine configuration which engine or configuration has or has previously had a first nozzle assembly having a plurality of convergent flaps, a plurality of divergent flaps, a plurality of external flaps, a throat defined by the convergent flaps and/or the divergent flaps, and an actuation linkage coupled to control a size of the throat, the method comprising installing or engineering a second assembly comprising:
a plurality of combustion conduits (100) each having:
at least one inlet (102) positioned to receive fuel and air;
an ignitor (160) for initiating combustion of the fuel and air; and
at least one outlet (104), positioned to discharge combustion products to form a fluidic throat.

23. The method of claim 22 wherein the second assembly has:
a convergent portion (302);
a divergent portion (304); and
a physical throat (306).

24. The method of claim 22 or 23 wherein:
said at least one inlet (102) is coupled to receive fan bleed air.

25. The method of any of claims 22 to 24 wherein:
said at least one inlet (102) comprises at least one fuel inlet and at least one air inlet, separate from the fuel inlet.
